(19) Europäisches Patentamt / European Patent Office / Office européen des brevets

(11) **EP 3 940 614 A1**

(12) **DEMANDE DE BREVET EUROPEEN**

(43) Date de publication:
**19.01.2022 Bulletin 2022/03**

(21) Numéro de dépôt: **21184995.5**

(22) Date de dépôt: **12.07.2021**

(51) Classification Internationale des Brevets (IPC):
**G06Q 20/18** (2012.01)  **G06Q 20/20** (2012.01)
**G07G 1/00** (2006.01)  **A47F 10/02** (2006.01)
**G06Q 10/08** (2012.01)  **G06Q 30/06** (2012.01)

(52) Classification Coopérative des Brevets (CPC):
**A47F 10/02; G06Q 10/087; G06Q 30/06;**
A47B 2220/0091; A47F 2010/025

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **15.07.2020 FR 2007432**
 **15.07.2020 FR 2007433**
 **15.07.2020 FR 2007430**

(71) Demandeur: **Storelift**
 **94160 Saint-Mandé (FR)**

(72) Inventeurs:
• **HAYAT, Tom**
 **75116 Paris (FR)**
• **OHLEYER, Sébastien**
 **93340 LE RAINCY (FR)**
• **WU, Honggui**
 **92160 ANTONY (FR)**
• **LE, Thuc Trinh**
 **93360 NEUILLY PLAISANCE (FR)**

(74) Mandataire: **LLR**
 **11 boulevard de Sébastopol**
 **75001 Paris (FR)**

(54) **MAGASIN AUTONOME DE VENTE AU DÉTAIL EN LIBRE-SERVICE**

(57) L'invention concerne le domaine des magasins autonomes de vente au détail en libre-service. Elle concerne plus particulièrement le fonctionnement de magasins autonomes de micro-proximité de vente au détail en libre-service sans caissier.

[Fig. 1]

EP 3 940 614 A1

**Description**

L'invention concerne le domaine des magasins autonomes de vente au détail en libre-service. Elle concerne plus particulièrement le fonctionnement de magasins autonomes de micro-proximité de vente au détail en libre-service sans caissier.

L'automatisation du domaine du commerce de détail a fait l'objet de nombreuses initiatives au cours des dernières années, ces initiatives étant essentiellement l'apanage des enseignes des grands commerces désireuses de minimiser leurs coûts de main d'œuvre. Les publications du domaine ainsi que l'existence de certains grands magasins autonomes pilotes témoignent de la complexité des solutions proposées. A titre illustratif, l'utilisation de systèmes de reconnaissance optique des produits très sophistiqués qui requièrent la mise en place de matériels très coûteux a déjà été décrite dans l'état la technique.

Les événements malheureux liés au Covid-19 ont montré que, dans le domaine alimentaire, il était primordial de limiter les déplacements ainsi que les interactions humaines afin de minimiser les risques de transmissions virales. Les commerces de proximité devraient ainsi idéalement s'adapter pour répondre à ces nouvelles exigences. Ces commerces de proximité ne peuvent toutefois pas se permettre de raisonner comme le font les grands commerces. En effet, en plus du coût trop élevé que représenterait la mise en place de ces solutions techniques d'automatisation de la grande distribution, leur mise en œuvre s'avère être si complexe qu'elle engendre un pourcentage d'erreurs inacceptable pour le commerçant.

La demande de brevet FR3038106 (A1) concerne une installation formant point de vente qui comprend une pluralité de postes de vente et un accès informatique, chaque poste de vente étant muni d'un détecteur à distance de badge client, agencé pour adresser sur l'accès informatique, en cas de détection, un identifiant client et un identifiant du détecteur, tandis que l'informatique répond en lançant un processus d'achat sur le poste de vente sujet à détection.

L'invention a notamment pour but un magasin amélioré et un fonctionnement amélioré de magasins autonomes de micro-proximité de vente au détail en libre-service sans caisses ni caissiers qui permet de répondre à ces problèmes grâce au développement de techniques, méthodes et procédures originales et inventives comme décrites et revendiquées ci-dessous.

A cet effet l'invention a pour objet un magasin de vente au détail de produits en libre-service pour des clients ayant un identifiant représenté par un ID-client comprenant

un moyen d'accès contrôlé et d'identification du client par son ID-client,

un moyen de sortie contrôlée et de paiement automatisé sans caisses ni caissiers,

des rangées d'étagères comprenant des plateaux sur lesquels sont disposés les produits,

un inventaire des produits en magasin intégrant au moins les informations de poids des produits, de localisation dans l'espace des produits et des plateaux sur lesquels les produits sont disposés,

un système de contrôle de prise de produit en temps réel comprenant un moyen de mesure de poids et un moyen de gestion de poids,

le moyen de mesure de poids comprenant un dispositif de détection de poids intégré aux plateaux, capable de détecter une différence de poids pendant une opération d'enlèvement de produit et de produire des signaux correspondants ; et

le moyen de gestion de poids recevant les signaux du moyen de mesure de poids et générant grâce à ces signaux et aux informations d'inventaire des produits des événements de prise de produit correspondants en temps réel comprenant les informations de localisation du produit pris,

un système de reconnaissance et de suivi du client en temps réel capable de générer des informations en temps réel comprenant la reconnaissance et le suivi de chaque client associé au client identifié ID-client et la localisation de chaque client dans le magasin,

un moyen d'attribution de la prise de produit au client identifié ID-client ayant pris le produit comprenant

la création d'un panier d'achat de produits pour le client identifié ID-client, et

un dispositif d'attribution de la prise de produit qui, à chaque événement de prise de produit, prend en compte en temps réel la distance entre la localisation du produit pris et la localisation du client dans le magasin pour attribuer le produit pris au client identifié ID-client et au panier d'achat de produits correspondant,

caractérisé en ce que le moyen de gestion de poids est capable de générer à partir des signaux du dispositif de détection de poids des événements qui ne sont pas de manière individuelle des événements de prise de produit et qui comprennent des informations de différence de poids, de temps et de durée de chaque événement et en

ce que le moyen de gestion de poids comprend un module d'agrégation qui traite et regroupe les signaux transmis par le dispositif de détection de poids pendant un certain laps de temps et est capable de reclassifier en un événement de prise de produit une somme d'événements qui ne le sont pas.

L'utilisation du module d'agrégation s'est avérée particulièrement utile et efficace pour de nombreuses raisons. En effet, il est connu que le problème majeur du fonctionnement des magasins autonomes de vente au détail en libre-service est, quel que soit le modèle et le matériel utilisés, lié à la génération de messages d'erreur d'attribution ou plutôt de messages d'erreur de non-attribution de produits alors que la prise de produit a bien eu lieu. Ces messages d'erreurs impliquent de mettre en place non seulement des vérifications humaines mais encore des matériels de plus en plus coûteux et sophistiqués ce qui va à l'encontre du principe même de la réalisation de nombreux magasins autonomes de micro-proximité de vente au détail en libre-service sans caissier. Or, il s'avère que l'utilisation du module d'agrégation conforme à la présente invention a permis de réduire drastiquement voir d'éliminer les erreurs susmentionnées ce qui représente un avantage considérable dans la réalisation et le fonctionnement du magasin.

L'invention a également pour objet un magasin de vente au détail de produits en libre-service pour des clients ayant un identifiant représenté par un ID-client comprenant

un moyen d'accès contrôlé et d'identification du client par son ID-client,

un moyen de sortie contrôlée et de paiement automatisé sans caisses ni caissiers,

des rangées d'étagères comprenant des plateaux sur lesquels sont disposés les produits,

un inventaire des produits en magasin intégrant au moins les informations de poids des produits, de localisation dans l'espace des produits et des plateaux sur lesquels les produits sont disposés,

un système de contrôle de prise de produit en temps réel comprenant un moyen de mesure de poids et un moyen de gestion de poids,

le moyen de mesure de poids comprenant un dispositif de détection de poids intégré aux plateaux, capable de détecter une différence de poids pendant une opération d'enlèvement de produit et de produire des signaux correspondants ; et

le moyen de gestion de poids recevant les signaux du moyen de mesure de poids et générant grâce à ces signaux et aux informations d'inventaire des produits des événements de prise de produit correspondants en temps réel comprenant les informations de localisation du produit pris,

un système de reconnaissance et de suivi du client en temps réel comprenant des appareils de prise de vue en trois dimensions 3D équipés de capteurs de couleurs et un dispositif de reconnaissance et de suivi du client,

les appareils de prise de vue 3D couvrant tout l'espace du magasin dans lequel les clients peuvent se déplacer de manière à détecter les clients et à produire des signaux correspondants ; et

le dispositif de reconnaissance et de suivi du client recevant les signaux des appareils de prise de vue 3D et générant des informations correspondantes en temps réel comprenant la reconnaissance et le suivi de chaque client associé au client identifié ID-client et la localisation de chaque client dans le magasin,

le dispositif de reconnaissance et de suivi du client en temps réel comprenant un module de détection de client au moyen d'un appareil de prise de vue en 3D qui associe à chaque client une boîte englobante et un masque de segmentation, un module d'extraction de variables explicatives par suivi multi-clients au moyen d'un appareil de prise de vue en 3D qui associe un descripteur d'apparence à chaque client et un module de suivi multi-clients multi-appareils de prise de vue en 3D qui fusionne en temps réel les informations des autres modules de manière à localiser chaque client dans le magasin en temps réel,

un moyen d'attribution de la prise de produit au client identifié ID-client ayant pris le produit comprenant

la création d'un panier d'achat de produits pour le client identifié ID-client, et

un dispositif d'attribution de la prise de produit qui, à chaque événement de prise de produit, prend en compte en temps réel la distance entre la localisation du produit pris et la localisation du client dans le magasin pour attribuer le produit pris au client identifié ID-client et au panier d'achat de produits correspondant,

caractérisé en ce que le moyen de gestion de poids est capable de générer à partir des signaux du dispositif de détection de poids des événements qui ne sont pas de manière individuelle des événements de prise de produit et qui comprennent des informations de différence de poids, de temps et de durée de chaque événement et en ce que le moyen de gestion de poids comprend un module d'agrégation qui traite et regroupe les signaux transmis par le dispositif de détection de poids pendant un certain laps de temps et est capable de reclassifier en un événement de prise de produit une somme d'événements qui ne le sont pas.

La représentation des entités, dispositifs, systèmes, étapes et/ou moyens peut avantageusement utiliser des références permettant de faciliter la compréhension et le cheminement des étapes de la présente invention. Ainsi, à cet effet, l'invention a également pour objet un magasin de vente au détail de produits en libre-service pour des clients ayant un identifiant représenté par un ID-client comprenant

un moyen d'accès contrôlé et d'identification du client par son ID-client,

un moyen de sortie contrôlée et de paiement automatisé sans caisses ni caissiers,

des rangées d'étagères comprenant des plateaux (n) sur lesquels sont disposés les produits (Pi),

un inventaire des produits (Pi) en magasin intégrant au moins les informations de poids (Pi-poids) des produits, de localisation dans l'espace (Pi-xyz) des produits et des plateaux (n) sur lesquels les produits sont disposés,

un système de contrôle de prise de produit en temps réel comprenant un moyen de mesure de poids et un moyen de gestion de poids,

le moyen de mesure de poids comprenant un dispositif de détection de poids intégré aux plateaux, capable de détecter une différence de poids pendant une opération d'enlèvement de produit et de produire des signaux correspondants ; et

le moyen de gestion de poids recevant les signaux du moyen de mesure de poids et générant grâce à ces signaux et aux informations d'inventaire des produits des événements de prise de produit (Ep-Pi) correspondants en temps réel comprenant les informations de localisation du produit pris Pi-xyz,

un système de reconnaissance et de suivi du client en temps réel comprenant des appareils de prise de vue en trois dimensions (3D) équipés de capteurs de couleurs et un dispositif de reconnaissance et de suivi du client,

les appareils de prise de vue 3D couvrant tout l'espace du magasin dans lequel les clients peuvent se déplacer de manière à détecter les clients et à produire des signaux correspondants ; et

le dispositif de reconnaissance et de suivi du client recevant les signaux des appareils de prise de vue 3D et générant des informations correspondantes en temps réel comprenant la reconnaissance et le suivi de chaque client associé au client identifié ID-client et la localisation de chaque client dans le magasin (Client-A-xyz),

le dispositif de reconnaissance et de suivi du client en temps réel comprenant un module de détection de client au moyen d'un appareil de prise de vue en 3D qui associe à chaque client une boîte englobante et un masque de segmentation, un module d'extraction de variables explicatives par suivi multi-clients au moyen d'un appareil de prise de vue en 3D qui associe un descripteur d'apparence à chaque client et un module de suivi multi-clients multi-appareils de prise de vue en 3D qui fusionne en temps réel les informations des autres modules de manière à localiser chaque client dans le magasin en temps réel Client-A-xyz,

un moyen d'attribution de la prise de produit au client identifié ID-client ayant pris le produit comprenant

la création d'un panier d'achat de produits (ID-panier) pour le client identifié ID-client, et

un dispositif d'attribution de la prise de produit qui, à chaque événement de prise de produit Ep-Pi, prend en compte en temps réel la distance entre la localisation du produit pris Pi-xyz et la localisation du client dans le magasin Client-A-xyz pour attribuer le produit pris au client identifié ID-client et au panier d'achat de produits ID-panier correspondant, caractérisé en ce que le moyen de gestion de poids est capable de générer à partir des signaux du dispositif de détection de poids des événements qui ne sont pas de manière individuelle des événements de prise de produit et qui comprennent des informations de différence de poids, de temps et de durée de chaque événement et en ce que le moyen de gestion de poids comprend un module d'agrégation qui traite et regroupe les signaux transmis par le dispositif de détection de poids pendant un certain laps de temps et est capable de reclassifier en un événement de prise de produit une somme d'événements qui ne le sont pas.

L'invention a également pour objet un procédé de mise en œuvre du fonctionnement du dit magasin de vente au détail de produits en libre-service.

La présente invention a donc pour objet un magasin de vente au détail de produits en libre-service comprenant un système de reconnaissance et de suivi du client en temps réel qui comprend à titre illustratif un dispositif de reconnaissance et de suivi du client recevant les signaux des appareils de prise de vue 3D et générant les informations correspondantes en temps réel comprenant la reconnaissance et le suivi du client associé au client identifié (ID-client) et la localisation du client dans le magasin (Client-A-xyz).

Le but du système de reconnaissance et de suivi du client en temps réel est de pouvoir reconnaître et suivre plusieurs clients dans le magasin en temps réel sans avoir d'interruption dans le système de reconnaissance et de suivi et avec un minimum de matériel efficace et facile à installer et à déployer. Pour rappel, un des buts de nos magasins autonomes de vente au détail en libre-service sans caisses ni caissiers est de répondre à une demande de micro-proximité, ce qui implique le déploiement de nombreux magasins de petite taille ; à titre illustratif, les magasins et leur fonctionnement sont particulièrement adaptés à une présence simultanée à l'intérieur du magasin de moins de 25 clients, par exemple moins de 10 clients ce qui implique de devoir répondre à des problématiques différentes des grands magasins.

A titre illustratif, le système de reconnaissance et de suivi du client en temps réel utilise des composantes informatiques et est conçu et développé au moyen d'un système d'exploitation pour applications robotiques ; les logiciels et outils ROS (« Robot Operating System », librairie de communication inter-processus et compatible multilangages de programmation) sont avantageusement utilisés, en particulier, ceux du système ROS2 et plus particulièrement ceux du système ROS 2 Eloquent dont la première version a été publiée le 22 novembre 2019.

Le système de reconnaissance et de suivi du client en temps réel selon la présente invention comprend avantageusement 3 modules

1. Un module de détection d'objet (appliqué au client),
2. Un module d'extraction de variables explicatives par suivi multi-objets (appliqué aux clients) au moyen d'un seul appareil de prise de vue en trois dimensions (« 3D »), appareil que nous nommerons « caméra » dans la description des modules ci-dessous, et
3. Un module de suivi multi-objets (appliqué aux clients) multi-caméras.

Suivant d'autres caractéristiques optionnelles des trois modules du système de reconnaissance et de suivi du client en temps réel prises seules ou en combinaison :

1. Module de détection d'objet (appliqué au client)

Ce module de détection de client au moyen d'un appareil de prise de vue en 3D permet d'associer à chaque client une boîte englobante et un masque de segmentation comme décrit ci-après. Ce module reçoit et enregistre les signaux (images successives) provenant d'un appareil de prise de vue 3D équipé de capteurs de couleurs, détecte l'objet (client) et transmet un signal traité (tel qu'un message informatique) aux modules suivants du système de reconnaissance et de suivi du client en temps réel. On peut le représenter à titre illustratif en tant que nœud RGB-D permettant l'enregistrement d'une image colorée et d'une profondeur ; le nœud étant considéré comme un algorithme indépendant qui reçoit et traite un signal d'entrée au moyen d'une méthode d'analyse des données (les nœuds sont donc assimilables à des processus qui effectuent des calculs et communiquent entre eux au moyen de messages). Le module de détection d'objet (client) utilise avantageusement un algorithme d'apprentissage en profondeur (« Deep Learning »), par exemple un algorithme de détection d'objet (par exemple un algorithme YOLO / par exemple la version YOLOv3) et un algorithme pour la classification et la détection d'objets dans les images appelée « data clustering » en langue anglaise et souvent traduite en français par la méthode de partitionnement de données. Cette méthode vise à diviser un ensemble de données en différents « paquets » homogènes, les dits paquets partageant des caractéristiques communes souvent liées à des critères de proximité (similarité informatique) que l'on définit en introduisant des mesures et classes de distance entre les objets. A titre illustratif, un partitionnement efficace requiert de minimiser l'inertie dans chaque classe pour obtenir des grappes (« cluster » en anglais) les plus homogènes possibles et de maximiser l'inertie entre les classes afin d'obtenir des sous-ensembles bien différenciés.

En traitant ainsi les signaux (images successives) provenant des appareils de prise de vue 3D équipés de capteurs de couleurs, le module de détection d'objet (client) permet d'extraire la position globale de l'objet (client) par une boîte englobante, son emprise précise par le biais d'un masque de segmentation venant l'épouser pixel par pixel et donc sa position en 3D en temps réel. Ces informations (signaux traités) sont comprises dans les messages informatiques (message ROS) qui sont transmis aux modules suivants du système de reconnaissance et de suivi du client en temps réel.

Dans un mode d'exécution particulier selon la présente invention, l'algorithme de partitionnement de données va définir un point particulier de cette position 3D en temps réel comme point de référence. On pourra citer à titre illustratif, le centre de gravité, la tête et/ou le point situé au centre du segment reliant les 2 épaules du client, ce dernier point étant privilégié dans le cadre de la présente invention.

2. Module d'extraction de variables explicatives par suivi multi-objets (appliqué aux clients) au moyen d'une seule caméra

Ce module d'extraction de variables explicatives par suivi multi-clients au moyen d'un appareil de prise de vue en 3D permet d'associer un descripteur d'apparence à chaque client comme décrit ci-après. Ce module reçoit et enregistre les signaux traités (messages informatiques) provenant du module de détection et en extrait des variables explicatives par suivi des multi-objets détectés (les différents clients) ; les informations de détection provenant du module précédent sont donc la boîte englobante, le masque de segmentation et la position en 3D en temps réel de chaque objet (client). En particulier, ce module permet d'extraire l'apparence des objets (des clients) et le suivi des objets (clients) détectés dans un seul domaine de caméra (le champ de vision de la caméra) et les envoie au module suivant qui gère le suivi global des clients (module de suivi multi-objets (appliqué aux clients) multi-caméras) via des messages informatiques (par exemple des messages ROS).

On peut le représenter à titre illustratif en tant que nœud (algorithme indépendant qui reçoit et traite un signal d'entrée au moyen d'une méthode d'analyse des données) qui utilise les informations provenant du nœud de détection d'objet du premier module [telles que les boîtes englobantes, masques de segmentation et positions en 3D de chaque objet (client) en temps réel] pour en extraire des descripteurs d'apparence des objets (clients) ainsi que leur suivi, communément représentés dans la technique par les « vecteurs d'apparence ».

Ce module utilise avantageusement un modèle d'apprentissage en profondeur de réidentification qui permet par correspondance de reconnaitre les descripteurs d'apparence des clients d'image en image afin d'assurer la reconnaissance de chaque client. Pour le suivi des descripteurs d'apparence (d'image en image) l'algorithme Deepsort sera avantageusement utilisé. L'apprentissage en profondeur (connu sous le nom de « deep learning » en anglais) est un ensemble de méthodes d'apprentissage automatique permettant de modéliser des données grâce à des architectures articulées de différentes transformations non linéaires.

L'utilisation de descripteurs d'apparence (ou vecteurs d'apparence) s'est avérée particulièrement pertinente pour répondre aux objectifs de la présente invention. L'idée du descripteur d'apparence est d'obtenir un vecteur d'apparence capable de décrire toutes les caractéristiques d'une image donnée. C'est grâce à une métrique de distance combinée à une technique d'apprentissage en profondeur que le suivi des descripteurs d'apparence devient optimum.

Ces descripteurs d'apparence prennent préférentiellement en compte plusieurs parties du corps humain du client parmi lesquelles nous citerons à titre illustratif le squelette, la tête, les épaules, les bras, les coudes, les poignets, les mains, les jambes, et/ou les pieds.

Il est intéressant de noter qu'à ce stade de la présente invention, il n'a pas encore été nécessaire d'associer un client identifié par son ID-client lors de son entrée dans le magasin avec les dits vecteurs d'apparence. En effet, cette étape d'association intervient préférentiellement lors de la mise en œuvre du 3ème module tel que décrit ci-dessous.

3. Module de suivi multi-objets (appliqué aux clients) multi-caméras

Ce module de suivi multi-clients multi-caméras fusionne en temps réel les informations des autres modules de manière à localiser chaque client dans le magasin en temps réel comme décrit ci-après.

Comme indiqué dans la description qui suit, le quadrillage par les caméras dans le magasin est de préférence organisé de telle sorte que toute partie de l'espace du magasin dans lequel les clients peuvent se déplacer est couverte simultanément par au moins 2 caméras, de préférence 3 caméras, idéalement 4 caméras.

L'objectif de ce module est de combiner toutes les informations provenant des multiples nœuds de suivi uniques (1 pour chaque caméra), afin d'assurer que chaque client se trouvant dans le magasin y soit reconnu et suivi au moyen de son identifiant (Client-ID) et de sa position (Client-A-xyz) en temps réel. Ce module peut avantageusement comprendre une combinaison de plusieurs sous-modules, par exemple un sous-module de filtre de messages, un sous-module de fusion de caméras, un sous-module de suivi global et en option un sous-module de modèle gaussien de mélange pour la réidentification des tâches.

3.1. Filtre de messages - ce sous-module est avantageusement utilisé pour synchroniser les messages provenant des modules précédents pour s'assurer que tous les messages ont le même horodatage ; cela permet donc de synchroniser tous les signaux émis par toutes les caméras.

3.2. Fusion de caméras - ce sous-module est avantageusement utilisé pour réconcilier les points de vue entre les caméras. Ce module fusionne les détections provenant de différentes caméras pour former une détection globale tout en gérant les occlusions d'objets et les détections manquantes. À cette fin, un algorithme de flux à coût minimum est avantageusement utilisé. Cette technique prend chaque détection comme un nœud, les nœuds de différentes caméras sont connectés ensemble pour former un segment. Le coût du segment représente la dissimilarité entre deux nœuds. Des nœuds factices peuvent être ajoutés pour gérer les détections manquantes.

A titre illustratif, le coût peut être calculé sur la base des coûts moyens pondérés : on tient compte du coût de la position du client et le coût de l'apparence du client (informations transmises par les modules précédents) de sorte que le coût final peut être calculé au moyen de l'équation

$$\text{Coût\_Final} = \text{Coût\_Position} * w + \text{Coût\_Apparence} * (1-w)$$

où le Coût_Position est la distance euclidienne entre la position en 3 dimensions (xyz) de 2 détections successives, et le Coût_Apparence est le cosinus de la distance entre deux descripteurs d'apparence successifs (vecteurs) du module précédent ; comme déjà indiqué, un algorithme d'apprentissage en profondeur est avantageusement utilisé pour le suivi des descripteurs d'apparence, en particulier l'algorithme Deepsort.

3.3. Suivi global - Après avoir fusionné toutes les détections provenant des caméras, un suivi global est avantageusement utilisé pour attribuer une identification unique aux détections. L'objectif est de suivre ces détections dans le temps. Ce sous-module permet donc de gérer les événements de suivi des clients depuis leur entrée dans le magasin jusqu'à leur sortie du magasin (« check-in » et « check-out »).

A titre illustratif, ce sous-module construit une matrice de coûts entre les détections et les suivis enregistrés entre deux boîtes englobantes successives, puis associe les informations de suivis aux informations de détections en résolvant la correspondance bipartite.

Ce sous-module peut en premier lieu avantageusement utiliser un filtre de Kalman étendu (EKF) car il permet de modéliser le mouvement (donc le suivi) des personnes dans le magasin, même lorsque ces personnes ne suivent pas un modèle constant de vitesse linéaire standard.

Pour associer les suivis et les détections des objets (clients), ce sous-module peut aussi avantageusement utiliser une combinaison des coûts de mouvement (suivi) et des coûts d'apparence. La matrice des coûts de mouvement (suivi) est basée sur le calcul de la distance de Mahalanobis entre les observations et les suivis provenant du filtre de Kalman EKF. La matrice des coûts d'apparence est basée sur la fonctionnalité extraite via un algorithme d'apprentissage en profondeur, de préférence l'algorithme Deepsort. Pour être plus robuste et faire en sorte que le suivi ait des souvenirs plus longs, chaque suivi d'apparence est constitué d'une galerie d'au moins 100, de préférence au moins 200 vecteurs d'apparence. Chaque fois, les coûts doivent être calculés, une requête de la galerie est effectuée et la moyenne des 10 meilleurs scores est calculée. De cette façon, le suivi a la capacité de récupérer l'identifiant de suivi client correct si un changement se produit.

Comme on détecte les événements d'entrée dans le magasin et de sortie du magasin (check-in et check-out), le nombre de chemins/suivis dans le magasin est fixe ; il n'y a pas de discontinuités car il n'y a pas de possibilité d'introduction de client ou de sortie de client par un autre moyen. Cela évite de créer / supprimer des chemins/suivis au milieu du magasin. Ces événements sont liés à d'autres événements tels que par exemple la numérisation d'un QR-code comme décrit ci-après et des zones spécifiques de la boutique.

3.4. Un sous-module de modèle gaussien de mélange pour la réidentification des tâches peut également être avantageusement utilisé dans le module de suivi multi-clients multi-caméras (celui qui fusionne en temps réel les informations des autres modules de manière à localiser chaque client dans le magasin en temps réel). Ce sous-module est un sous-module complémentaire indépendant qui permet d'améliorer la reconnaissance et le suivi de client par exemple lors d'occlusions trop importantes. Ce sous-module utilise un modèle gaussien de gestion d'apparence globale temporelle qui va permettre de faire des vérifications de la reconnaissance et du suivi des clients.

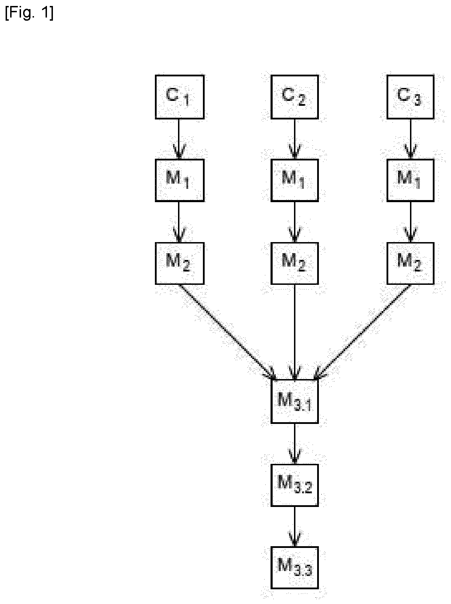

Un exemple de système de reconnaissance et de suivi du client en temps réel est illustré dans la figure 1. Les appareils de prise de vue en 3D y sont représentés par les caméras C1, C2 et C3. Les caméras envoient leurs images (messages RGB-D) vers les modules suivants. Le module de détection de client est représenté schématiquement par les boîtes M1 qui associent à chaque client une boîte englobante et un masque de segmentation, informations qui sont transmises aux modules suivants. Le module d'extraction de variables explicatives par suivi multi-clients au moyen d'un appareil de prise de vue en 3D est représenté schématiquement par les boîtes M2 qui associent un descripteur d'apparence à chaque client, informations qui sont transmises aux modules suivants. Enfin, les sous-modules M3.1, M3.2 et M3.3 du module de suivi multi-clients multi-appareils de prise de vue en 3D fusionnent en temps réel les informations des autres modules de manière à localiser chaque client dans le magasin en temps réel Client-A-xyz ; ces sous-modules sont respectivement les sous-modules M3.1 de filtre de messages (synchronisation), M3.2 de fusion des caméras (fusion des différents points de vue) et M3.3 de suivi global du client. Le tout permettant d'aboutir à la connaissance au temps t de la position de chaque client au sein du magasin.

La présente invention a donc pour objet un magasin de vente au détail de produits en libre-service comprenant un système de reconnaissance et de suivi du client en temps réel qui comprend à titre illustratif des appareils de prise de vue en trois dimensions (3D) qui couvrent tout l'espace du magasin dans lequel les clients peuvent se déplacer de manière à détecter les clients et à produire des signaux correspondants.

A titre illustratif, les appareils de prise de vue 3D, de préférence les caméras 3D, sont équipés de capteurs de couleurs qui englobent au moins les couleurs rouge, vert, bleu (RGB).

Suivant d'autres caractéristiques optionnelles des appareils de prise de vue 3D prises seules ou en combinaison :

- ce sont des caméras stéréos ou des caméras temps de vol ;
- ce sont des caméras mobiles ou fixes, de préférence fixes ;
- toutes les caméras participant au système de reconnaissance et de suivi du client en temps réel sont identiques ;
- le nombre d'images par seconde, également appelé FPS (frames per second) en langue anglaise) envoyées par chaque appareil de prise de vue 3D vers le dispositif de reconnaissance et de suivi du client (par exemple vers le module de détection) est supérieur à 20 ;
- les signaux envoyés par chaque appareil de prise de vue 3D vers le dispositif de reconnaissance et de suivi du client (par exemple vers le module de détection) sont des messages informatiques de type RGB-D ;
- les signaux envoyés par chaque appareil de prise de vue 3D vers le dispositif de reconnaissance et de suivi du client (par exemple vers le module de détection) proviennent de la superposition d'images de profondeur et d'images couleurs ;
- un étalonnage/calibrage des appareils de prise de vue 3D est effectué ;
- la somme des champs de vision (champ visuel ou angle de vue) de tous les appareils de prise de vue 3D couvrent tout l'espace du magasin dans lequel les clients peuvent se déplacer et il y a un chevauchement des champs de vision entre au moins deux appareils de prise de vue 3D ;
- le quadrillage représenté par les champs de vision des appareils de prise de vue 3D dans le magasin est organisé de telle sorte que toute partie de l'espace du magasin dans lequel les clients peuvent se déplacer est couverte simultanément par au moins 2 caméras, de préférence 3 caméras, idéalement 4 caméras.

La présente invention a donc pour objet un magasin de vente au détail de produits en libre-service comprenant de préférence un plancher, un plafond et des murs délimitant un espace clos dans lequel les produits se trouvent et dans lequel les clients achètent les dits produits.

Suivant d'autres caractéristiques optionnelles du magasin prises seules ou en combinaison :

- le moyen d'accès contrôlé et d'identification du client est un dispositif d'accès contrôlé et d'identification du client (ID-client) ; ce dispositif peut être localisé à tout endroit approprié, par exemple au niveau d'une porte d'entrée du magasin ou d'un sas d'entrée qui est de préférence compris dans l'espace clos du magasin ; ce dispositif est indépendant du système de reconnaissance et de suivi du client en temps réel, bien qu'il soit également possible d'utiliser le dit système de reconnaissance et de suivi du client en temps réel an tant que dispositif d'accès contrôlé et d'identification du client (ID-client) ;

- le moyen de sortie contrôlée est un dispositif de sortie contrôlée du client (ID-client) ; ce dispositif peut être localisé à tout endroit approprié, par exemple au niveau d'une porte de sortie du magasin ou d'un sas de sortie qui est de préférence compris dans l'espace clos du magasin ; ce dispositif est indépendant du système de reconnaissance et de suivi du client en temps réel, bien qu'il soit également possible d'utiliser le dit système de reconnaissance et de suivi du client en temps réel an tant que dispositif de sortie contrôlée du client (ID-client) ;

- le moyen d'accès contrôlé et d'identification du client et le moyen de sortie contrôlée partagent le même dispositif ;

- le magasin est un parallélépipède rectangle ayant une base (sol) de largeur comprise entre 2,4 et 10 mètres et de longueur comprise entre 6 et 25 mètres et une hauteur comprise entre 2,5 et 3,5 mètres ;

- le magasin est construit à partir de conteneurs de transport, de préférence grâce au reconditionnement de conteneurs de transport usagés ;

- les magasins et leur fonctionnement sont adaptés à une présence simultanée à l'intérieur du magasin de moins de 25 clients ;

- l'inventaire des produits (Pi) en magasin intègre au moins les informations de poids (Pi-poids) des produits, de localisation dans l'espace (Pi-xyz) des produits et des plateaux (n) sur lesquels les produits sont disposés ainsi que les informations de quantité et de prix des produits en magasin ;

- le magasin de vente au détail de produits en libre-service comprend des rangées d'étagères comprenant des plateaux sur lesquels sont disposés les produits.

Suivant d'autres caractéristiques optionnelles, prises seules ou en combinaison :

- le rayonnage du magasin est constitué d'un ensemble d'étagères comprenant des plateaux sur lesquels les produits à la vente sont disposés ;

- le rayonnage est un rayonnage modulable, de préférence métallique ;

- une étagère est un meuble formé d'au moins deux plateaux superposés, de préférence au moins quatre plateaux superposés et de supports de maintien des plateaux, par exemple des montants ;

- les plateaux d'étagères sont horizontaux ;

- les plateaux d'étagères sont réglables en hauteur ;

- une rangée d'étagères comprend au moins deux étagères juxtaposées, par exemple solidaires, de préférence au moins quatre étagères juxtaposées ;

- au moins un plateau d'une étagère est à la même hauteur qu'un autre plateau de l'étagère suivante dans la rangée d'étagères ;

- plus de 30% du nombre de tous les plateaux d'étagères dans une rangée d'étagères sont des plateaux d'étagère situés à la même hauteur que des plateaux d'étagère suivante dans la rangée d'étagères ;

- plus de 50% du nombre de tous les plateaux d'étagères dans une rangée d'étagères sont des plateaux d'étagère situés à la même hauteur que des plateaux d'étagère suivante dans la rangée d'étagères ;

- au moins deux étagères juxtaposées, de préférence toutes les étagères juxtaposées, dans la même rangée d'étagères sont identiques. Elles ont donc le même nombre de plateaux disposés à la même hauteur.

Comme les plateaux intègrent les dispositifs de détection de poids, chacune des caractéristiques optionnelles, prises seules ou en combinaison, applicables aux dits plateaux est également applicable aux dits dispositifs de détection de poids et, en particulier aux balances comme détaillées ci-après dans la description ; ceci est également applicable au support horizontal de plateau lorsque le dit plateau est constitué d'un support, par exemple une tablette, sur lequel est positionné le dispositif de détection de poids.

Le magasin de vente au détail de produits en libre-service selon la présente invention comprend donc des rangées d'étagères comprenant des plateaux (n) sur lesquels sont disposés les produits (Pi), un inventaire des produits (Pi) en magasin intégrant au moins les informations de poids (Pi-poids) des produits, de localisation dans l'espace (Pi-xyz) des produits et des plateaux (n) sur lesquels les produits sont disposés, et un système de contrôle de prise de produit en temps réel comprenant un moyen de mesure de poids et un moyen de gestion de poids, le moyen de mesure de poids comprenant un dispositif de détection de poids intégré aux plateaux, capable de détecter une différence de poids pendant une opération d'enlèvement de produit et de produire des signaux correspondants ; et le moyen de gestion de poids recevant les signaux du moyen de mesure de poids et générant grâce à ces signaux et aux informations d'inventaire des produits des événements de prise de produit (Ep-Pi) correspondants en temps réel comprenant les informations de localisation du produit pris Pi-xyz.

Suivant d'autres caractéristiques optionnelles, prises seules ou en combinaison :

- chaque plateau intègre un dispositif individuel de détection de poids ;
- le plateau est constitué du dispositif de détection de poids ;
- le plateau comprend un support, par exemple une tablette, et le dispositif de détection de poids, support sur lequel le dispositif de détection de poids est disposé ;
- le dispositif de détection de poids consiste en un ou plusieurs capteurs de poids, par exemple une balance ou plusieurs balances ;
- le dispositif de détection de poids comprend d'une à quatre balances par plateau, par exemple au moins deux balances par plateau ;
- la profondeur d'une balance d'un plateau est identique ou correspond à 10% près à la profondeur dudit plateau ;
- la largeur d'une balance (quand il n'y en a qu'une par plateau) ou la somme des largeurs des balances d'un plateau est identique ou correspond à 10% près à la largeur dudit plateau ;
- le moyen de mesure de poids permet d'opérer en temps réel ;
- le moyen de gestion de poids comprend un système de traitement des signaux des capteurs/balances du magasin comportant avantageusement deux niveaux : un système de capture de signal et un système de détection de prise de produit. Le système de capture de signal lit en temps réel les données des capteurs de poids provenant du dispositif de détection de poids (capteurs/balances) et les envoie au système de détection de prise de produit. Le système de détection de prise de produit est constitué de plusieurs entités. Il prend en entrée le signal (analogique et/ou numérique) des capteurs / de la balance et génère des événements qualifiant la prise (ou la dépose) d'un (ou plusieurs) produit(s) au système de niveau supérieur.

Suivant d'autres caractéristiques optionnelles prises seules ou en combinaison :

- le système de capture de signal consiste en (i) un support (par exemple la face supérieure du plateau lorsque le plateau est le dispositif de détection de poids, ou la face supérieure de la balance disposée sur un support tel que par exemple la tablette du plateau) sur lequel sont placés les produits, (ii) un capteur de poids qui crée un signal analogique proportionnel à la masse posée sur le support ou enlevée du support, et (iii) un système de traitement du signal qui transforme le signal analogique du capteur en signal numérique et l'envoie au système de mesure de poids du produit en temps réel (également appelé système de détection de prise de produit) ;
- le système de détection de prise de produit reçoit le signal du système de capture de signal et génère des événements tels que :

  le signal d'entrée référencé [Se] qui représente la valeur mesurée par le dispositif de détection de poids (capteur/balance), valeur qui est de préférence échantillonnée à intervalle de temps régulier et très court (définie comme la durée d'échantillonnage des signaux « t1 »), par exemple un intervalle de temps inférieur à 500 millisecondes (ms), par exemple toutes les 200 millisecondes (ms) ;
  les événements en sortie (Es) qui correspondent à la différence de masse observée sur un certain échantillon de temps (inférieur à t1), l'instant où cet échantillon de temps a commencé, l'instant où il s'est terminé, ainsi que le type et le nombre de produit(s) correspondant à la différence de masse observée. Pour passer du signal d'entrée [Se] aux événements de sortie (Es), des traitements algorithmiques sont avantageusement appliqués : ces traitements optionnels, pris seuls ou en combinaison sont à titre illustratif

    - la détection d'échelon,
    - la classification de l'échelon,
    - l'agrégation d'échelon,
    - la fusion de signaux d'entrée (représentés par la fusion des dispositifs de détection de poids (capteurs ou balances).

Dans un mode de réalisation, le moyen de gestion de poids comprend et utilise un module de détection d'échelon qui reçoit le signal du dispositif de détection de poids [Se] ; le signal reçu peut être le signal analogique ou le signal numérique provenant de la transformation du signal analogique en signal numérique. Ce module de détection d'échelon est capable de transformer le signal reçu [Se] en informations exploitables. A titre illustratif une première transformation transforme le signal [Se], de préférence le signal numérique [Se], en une valeur de signal [Sm] ayant pour unité la masse ; cette transformation consiste par exemple en la multiplication du signal [Se] par le facteur de calibration propre au dispositif de détection de poids (capteur/balance). L'utilisation de ce module de détection d'échelon et la constitution des couples de valeurs ([Se], [Sm]) qui en découlent permet au moyen de gestion de poids de générer in fine les événements de prise de produit (Ep-Pi) grâce aux informations d'inventaire (positionnement produit et plateau).

Dans un mode de réalisation, le module de détection d'échelon comprend et utilise un système de rangement d'échelon. Ce rangement d'échelon consiste en la génération d'un nouveau signal booléen [Sc] de même échantillonnage que les valeurs ([Sm]) signifiant la présence ou non d'un échelon de masse prédéfini par le dispositif de gestion de poids. A titre illustratif, ce signal est construit de la manière suivante :

- Filtrage de [Sm] en supprimant les valeurs aberrantes (max et min sur un intervalle de temps glissant),
- Si le signal filtré est supérieur à la moyenne (glissante sur N dernières valeurs) additionnée d'une valeur seuil (ou inférieur à cette moyenne soustraite de la même valeur seuil) alors [Sc] vaut 1 (prise ou dépose) sinon il vaut 0 (pas d'événement). Cette valeur seuil sera préférentiellement proche voir identique à l'échelon de masse prédéfini ; l'échelon de masse prédéfini correspond avantageusement au poids du produit concerné, poids qui est connu grâce aux informations d'inventaire. A titre illustratif, pour un produit correspondant à un sachet de chips de 25 grammes, l'échelon de masse prédéfini sera de 25 grammes ; à une valeur de [Sm] égale à 25 grammes - ou à un multiple de ces 25 grammes - le système pourra attribuer la prise d'un sachet - ou de plusieurs sachets correspondant à la valeur du multiple. Comme ce même principe sera applicable pour tous les capteurs de poids et donc tous les produits, on peut également l'illustrer pour un produit correspondant à un paquet de pâtes de 500 grammes, l'échelon de masse prédéfini sera de 500 grammes ; à une valeur de [Sm] égale à 500 grammes - ou à un multiple de ces 500 grammes - le système pourra attribuer la prise d'un paquet - ou de plusieurs paquets correspondant à la valeur du multiple.

Dans un mode d'exécution particulier selon la présente invention, la sensibilité du filtrage du signal sera avantageusement adaptée au poids du produit disposé sur le plateau.

L'obtention d'un signal à deux valeurs ([Sm], [Sc]), échantillonné par exemple toutes les 200 ms, informe sur la présence ou non d'un échelon ainsi que la valeur en masse mesurée par le dispositif de détection de poids (les capteurs de poids, les balances). La dernière opération appliquée par ce module est la génération des événements de prise (Ep) qui peuvent être caractérisés par:

- Les temps de début et de fin de l'échelon, et
- La différence de masse observée pendant la durée de cet échelon.

L'utilisation de ce module de détection d'échelon et des couples de valeurs ([Sm], [Sc]) permet au moyen de gestion de poids de générer in fine des événements de prise de produit (Ep-Pi), grâce aux informations d'inventaire (positionnement produit et plateau).

Dans un mode de réalisation, le moyen de gestion de poids comprend et utilise un module de classification d'échelon.

Ce module de classification d'échelon peut avantageusement classer les événements de prise (Ep), par exemple en trois groupes, à savoir :

- événement "régulier" (Ep-Pi) : quand l'échelon observé correspond en effet à une prise (ou une dépose) du produit en vente sur la balance ; à titre illustratif, si un capteur de poids positionné au niveau d'un plateau sur lequel sont disposés des sachets de chips de 25 grammes émet un signal correspondant à un poids de 75 grammes, l'événement de prise indiquera en temps réel la prise de 3 sachets de chips de 25 grammes ainsi que leur positionnement ;
- événement "irrégulier" : quand l'échelon observé correspond à une prise (ou une dépose) d'un poids de produit différent du poids de produit en vente sur la balance ; à titre illustratif, si un capteur de poids positionné au niveau d'un plateau sur lequel sont disposés des sachets de chips de 25 grammes émet un signal correspondant à un poids de 15 grammes, l'événement de prise sera classifié comme « irrégulier » ;
- « faux » événement : quand l'échelon observé a été causé par un autre événement que la prise de produit en tant que telle (par exemple un souci matériel, un comportement inapproprié d'un client à proximité d'une balance, une porte de réfrigérateur se refermant violemment, etc.).

Ce module de classification d'échelon peut avantageusement être un module d'apprentissage automatique. A titre illustratif, cette classification est opérée par un algorithme d'apprentissage automatique ("machine learning") de type arbre de décision. Il prend en entrée différents paramètres construits à l'aide des valeurs des événements de prise (Ep), du poids du produit en vente sur la balance ou encore de l'emplacement de la balance dans le magasin. Ainsi classifiés, les événements (Ep-Pi) réguliers sont précisés du nombre de produits correspondant à la prise ou à la dépose et envoyés au système de niveau supérieur (moyen de gestion de poids) (Es). Les (Ep) irréguliers le sont aussi mais non précisés du nombre de produits pris ou déposés car le produit effectivement concerné est encore inconnu du système (dispositif de gestion de poids) à ce stade ; il s'agit de cas tel que celui illustré ci-dessus avec la prise de 15g sur un plateau de sachets de chips de 25g. Les faux événements sont rendus silencieux pour le système supérieur (moyen de gestion de poids) mais sont stockés et analysés dans une démarche d'amélioration constante de l'algorithme de classification. Les événements réguliers permettent simplement de signifier au système de niveau supérieur (moyen de gestion de poids) la prise ou dépose d'un produit sur la balance configurée effectivement pour ce produit tandis que les événements irréguliers permettent d'alerter sur le placement incorrect d'un produit sur une balance. Prise en compte par le système supérieur (moyen de gestion de poids), cette alerte permet de gérer certains cas de comportement client à la marge et de traiter les paniers de clients n'ayant pas respecté la disposition initiale des produits dans le magasin.

Dans un mode de réalisation, le moyen de gestion de poids comprend et utilise un module d'agrégation d'échelon. A titre illustratif, ce module d'agrégation d'échelon peut avantageusement améliorer la performance du module de détection d'échelon comme décrit ci-après : la prise d'un produit sur une balance n'étant pas tout le temps net et précise, il peut arriver qu'une seule prise engendre plusieurs échelons détectés par le module de détection d'échelon. C'est par exemple le cas quand un client effectue une prise saccadée, soit par maladresse, soit parce que le produit lui glisse de la main, etc. Comme les détections d'échelon tiennent compte d'un échelon de masse prédéfini (valeur seuil), cela peut souvent conduire à des générations d'événements de prises de produits (Ep) erronés alors qu'ils ne devraient pas l'être (par exemple par classement en tant qu'événement irrégulier) ; dans ce cas, les événements de prises de produits (Ep) sont avantageusement agrégés temporellement avant d'être classifiés.

L'agrégation temporelle consiste en un regroupement d'événements proches dans le temps (par exemple des événements successifs à moins de 2 secondes d'intervalle).

Ainsi, dans un mode de réalisation, le moyen de gestion de poids comprend un module d'agrégation qui traite et regroupe les signaux transmis par le dispositif de détection de poids pendant un certain laps de temps, de préférence supérieur à t1 (pour rappel, t1 correspondant à la durée d'échantillonnage des signaux) et inférieur à 2 secondes, de manière à reclassifier en un événement de prise de produit (Ep-Pi) une somme d'événements qui ne sont pas de manière individuelle des événements de prise de produit (Ep-Pi) ; décrite ci-après comme une agrégation temporelle.

A titre illustratif, dans le cas d'un moyen de gestion de poids appliqué à l'exemple du plateau comprenant les paquets de pâtes de 500 grammes, si le moyen de gestion de poids identifie grâce au module d'agrégation que, pendant un laps de temps (par exemple 1 seconde), il y a eu successivement des signaux provenant du dispositif de détection de poids correspondant aux événements suivants : -200g / +50g / -200g / +60g / -210g , le module d'agrégation identifie que la somme de ces événements correspond à -500g, soit au poids du produit (paquet de pâtes de 500g) disposé sur le plateau, ce qui permet de reclassifier ces événements en événements de prise de produit (Ep-Pi).

A titre illustratif, ces agrégations permettent de grouper les temps de début et fin d'événements ainsi que les deltas de masse mesurés ; cette agrégation est ensuite classifiée par un algorithme d'apprentissage automatique ("machine learning") de type arbre de décision (comme décrit ci-dessus) mais entraîné sur un ensemble de données d'événements agrégés et non isolés comme auparavant.

Cette agrégation temporelle est de préférence effectuée sur des événements provenant de signaux provenant d'un dispositif de détection de poids intégré spatialement à un seul plateau, plateau sur lequel des produits identiques (Pi) sont disposés ; on parlera par exemple d'événements issus d'une même balance.

Suivant d'autres caractéristiques optionnelles, prises seules ou en combinaison, l'agrégation temporelle peut également être utilisée spatialement :

- application de l'agrégation temporelle à des événements proches (spatialement) ; on parlera par exemple d'événements issus de balances différentes mais sur une même étagère,
- application de l'agrégation temporelle à des événements lointains (spatialement) ; on parlera par exemple d'événements lointains issus de balances différentes sur des étagères différentes.

A titre illustratif, les agrégations temporelles et spatiales des événements proches permettent d'identifier des faux événements dus à d'autres événements réguliers et irréguliers ayant eu lieu sur des balances proches. Un exemple particulier de cette agrégation spatiale est celui de l'impact involontaire qu'un client va générer sur la balance dédiée à une bouteille de cola voisine lorsqu'il enlève uniquement de l'étagère (étagère pouvant être représentée par un réfrigérateur dans ce cas-ci) une bouteille d'eau proche. Les événements lointains sont quant à eux traités de manière indépendante.

Dans un mode de réalisation, le moyen de gestion de poids comprend et utilise un module de fusion de dispositifs de détection de poids (balances). Afin de pouvoir réaliser de nombreux magasins autonomes de micro-proximité de vente au détail en libre-service sans caissier de petite taille, il a fallu opter pour une solution homogène en matière de modularité des dits magasins ; à ce titre, on a favorisé l'utilisation de plateaux de dimensions identiques et de préférence de dispositifs de détection de poids intégrés aux plateaux également identiques (plateaux standardisés). Comme la diversité des produits vendus implique une diversité des formes et tailles des éléments disposés sur les plateaux, il a fallu développer des solutions permettant de répondre à la problématique engendrée par la gestion de produits de taille/forme trop importante que pour pouvoir être disposés sur les balances individuelles des plateaux standardisés. La solution à ce problème technique a été de prévoir la possibilité d'utiliser deux balances juxtaposées et de préférence positionnées à la même hauteur (sur le même support d'un plateau, sur deux supports juxtaposés d'un même plateau sur la même étagère, ou encore sur deux supports de plateaux juxtaposés sur deux étagères juxtaposées) ce qui a permis de créer des situations dans lesquelles un produit pouvait se trouver à cheval sur deux balances. Pour fiabiliser cette fonctionnalité, les réalisations optionnelles suivantes prises seules ou en combinaison ont été développées :

- placement des balances juxtaposées sur lesquelles un produit mis à la vente chevauche (sur le même support d'un plateau, sur deux supports juxtaposés d'un même plateau sur la même étagère, ou encore sur deux supports de plateaux juxtaposés sur deux étagères juxtaposées) à même hauteur hi (i représentant la possibilité d'avoir plusieurs, par exemple de 2 à 8, plateaux à différentes hauteur) avec de préférence une tolérance de moins de 1 millimètre, de préférence de moins de 0,5 millimètre, de hauteur entre les hauteurs moyennes des arêtes des balances situées côte à côte ;
- les arêtes des balances situées côte à côte ne se touchent pas ;
- seul le vide sépare les arêtes des balances situées côte à côte ;
- la distance entre les deux arêtes des balances situées côte à côte est supérieure à 1 millimètre;
- la distance entre les deux arêtes des balances situées côte à côte est inférieure à 1 centimètre;
- un module de fusion de dispositifs de détection de poids, en l'occurrence de balances, est inclus dans le moyen de gestion de poids ;
- plus de 99% du poids du produit chevauchant deux balances, de préférence la totalité du poids du produit, est transmis aux deux balances juxtaposées ;
- le produit chevauchant deux balances n'est en contact qu'avec les balances.

A titre illustratif, le module de fusion de balance qui a été développé pour gérer la fusion de balances prend en entrée plusieurs signaux [Sm, Sc] correspondant aux signaux des balances à fusionner et génère un signal [VSm, VSc] de balance "virtuelle". Les différents signaux en entrée étant préalablement synchronisés en temps, [VSc] coïncide avec l'un des signaux [Sc] (qui sont identiques) et [VSm] est une somme des signaux [Sm]. Le signal fusionné [VSm, VSc] peut ensuite être traité comme un signal "classique" de balance unique par le moyen de gestion de poids (par exemple par le module de détection d'échelon pour créer les événements (Ep). Ainsi fusionnés, ces événements sont avantageusement transmis au module de classification d'échelon.

Ainsi, dans un mode de réalisation, le magasin est caractérisé en ce que le dispositif de détection de poids comprend des balances et en ce qu'au moins un produit se trouve à cheval sur deux balances juxtaposées.

Dans un mode de réalisation, le magasin est caractérisé en ce que le moyen de gestion de poids comprend un module de fusion de balances dans lequel les signaux provenant de deux balances juxtaposées et de préférence positionnées à la même hauteur respectivement intégrées au même plateau (deux balances juxtaposées du même dispositif de détection de poids), à deux plateaux juxtaposés sur la même étagère, ou encore à deux plateaux juxtaposés sur deux étagères juxtaposées, sont fusionnés et traités de manière à pouvoir générer grâce à ces signaux fusionnés et traités et aux informations d'inventaire des produits des événements de prise de produit correspondants en temps réel comprenant les informations de localisation du produit pris.

Le magasin de vente au détail de produits en libre-service selon la présente invention comprend donc un moyen d'attribution de la prise de produit au client identifié ID-client ayant pris le produit comprenant la création d'un panier d'achat de produits pour le client identifié ID-client, et un dispositif d'attribution de la prise de produit qui, à chaque événement de prise de produit, prend en compte en temps réel la distance entre la localisation du produit pris et la localisation du client dans le magasin pour attribuer le produit pris au client identifié ID-client et au panier d'achat de produits correspondant.

Le moyen d'attribution est avantageusement représenté par un dispositif d'attribution constitué d'un serveur informatique connecté au réseau local du magasin. Ce dispositif est avantageusement connecté à tous les systèmes de balances et de suivi de personnes pour pouvoir constituer le panier du client. Il peut également communiquer avec les autres services du magasin par des protocoles classiques (API, message broker comme Apache Kafka ou Rabbit MQ). Ce dispositif est aussi avantageusement connecté à internet pour pouvoir envoyer au service d'appui (back office en anglais) des informations permettant la constitution des paniers et la synchronisation de l'inventaire magasin.

Brève description des figures

L'invention sera mieux comprise à la lecture de la description qui va suivre donnée uniquement à titre d'exemple et faite en se référant aux dessins annexés dans lesquels :

[Fig. 1] la figure 1 est une vue schématique du système de reconnaissance et de suivi du client

La description qui suit illustre de manière générale le parcours client.

Une étape consiste en la création de l'identifiant client au moyen d'un code unique d'identification du client (ID-Client). Il faut également associer à cet ID-Client au moins un moyen de paiement. Cette étape d'association entre l'ID-Client et un moyen de paiement est de préférence effectuée avant de pouvoir entrer dans l'enceinte du magasin dédiée à l'achat de produits. L'enregistrement du moyen de paiement peut s'effectuer avant, pendant ou après l'étape de création de l'ID-Client. Cet enregistrement du moyen de paiement pourra aussi se faire à l'entrée du magasin, par exemple au niveau de la porte d'entrée ou d'un sas d'entrée dédié.

Cette création de l'ID-Client et cette association entre l'ID-Client et au moins un moyen de paiement peut s'effectuer par toute méthode appropriée ; on citera à titre illustratif l'utilisation d'une application informatique dédiée au magasin (par exemple, l'application dédiée « Boxy »). L'ID-Client avec le moyen de paiement associé vont permettre au client d'entrer dans l'enceinte du magasin dédiée à l'achat de produits.

A titre illustratif, un nouveau client commencera par télécharger l'application informatique dédiée au magasin (par exemple, l'application dédiée « Boxy ») sur tout support informatique approprié ; par exemple, un smartphone, un ordinateur de poche, un ordinateur portable (par exemple une tablette) ou un ordinateur de bureau, et se laissera guider par l'application pour finaliser l'étape de création de l'ID-Client et en option d'association entre l'ID-Client et au moins un moyen de paiement; l'utilisation d'un smartphone sera privilégiée car elle permettra ensuite d'utiliser le code généré par l'application sur le smartphone comme un code d'identification, tel qu'un code-QR, pour entrer et sortir du magasin.

Par exemple, lorsqu'un nouveau client arrive devant un magasin, il télécharge l'application Boxy sur son téléphone mobile et s'inscrit sur l'application en y ajoutant son numéro de téléphone, son adresse e-mail et les détails de sa carte de paiement (par exemple de sa carte bleue). L'ID-Client est créé, unique identifiant permettant de signer les QR-code reconnus dans les magasins de la présente invention. Comme expliqué ci-après, cet I D-Client permet de créer des sessions d'achat de produits dans les magasins, sessions d'achat représentées par la référence ID-Panier.

Une étape consécutive consiste en la création d'une session d'achat (ID-Panier), par exemple un code de session d'achat, lorsque le client identifié par son ID-Client entre dans le magasin pour effectuer ses achats. Cet ID-Panier est donc automatiquement associé au ID-Client.

Une étape essentielle de la présente invention consiste en l'identification visuelle du client et le suivi de cette identification visuelle pendant l'intégralité de son parcours d'achat dans le magasin, cette étape étant représentée par la référence ID-Suivi dans la description qui suit. Les caractéristiques de cet ID-Suivi et de son fonctionnement ont déjà été décrits ci-avant dans la description (Client-A-xyz). Cet ID-Suivi est donc automatiquement associé au ID-Panier du client qui est lui-même associé à l'ID-Client. Par exemple, lorsqu'un client est devant l'entrée du magasin, par exemple au niveau de la porte d'entrée ou d'un sas d'entrée dédié, il se fait reconnaitre au moyen de son ID-Client. Il scanne son QR-Code devant un lecteur de QR-code ; un écran et/ou un signal sonore lui indique d'entrer et/ou d'attendre si un nombre maximum de clients autorisés dans le magasin a déjà été atteint. En fonction du moyen de paiement utilisé, on peut avertir le client qu'il ne dispose que d'un montant plafonné particulier pour ses achats ; cet avertissement lui permettra éventuellement de procéder à l'enregistrement d'un autre moyen de paiement avant d'effectuer ses achats. On peut également avertir le client de toute information personnalisée, par exemple des promotions commerciales personnalisées ou non. Ces avertissements pourront se faire sur un ou plusieurs écrans positionnés dans le magasin et/ou avantageusement directement sur son smartphone.

Une caractéristique optionnelle particulièrement intéressante de la présente invention consiste en ce que le client principal puisse faire entrer d'autres personnes en même temps que lui dans le magasin, option très utile par exemple pour une famille. Cette option implique l'identification visuelle de chacune des personnes accompagnant le client principal et les suivis individuels de ces identifications pendant l'intégralité des parcours d'achat dans le magasin. Il est donc possible d'associer des ID-Suivi différents à un seul ID-Panier du client principal qui est lui-même associé à son ID-Client unique. Cette fonctionnalité optionnelle peut être gérée par l'intermédiaire d'un algorithme de gestions d'entrées multiples qui génère un ID-suivi à chaque client dans le magasin. On peut ainsi décrire un client dans le magasin par le couple (ID-Suivi, ID-Panier) et donc associer un moyen de paiement à chaque personne dans le magasin.

Comme chaque client est traqué en temps réel, le paramètre temps est également pris en compte lors du suivi de l'identification visuelle pendant l'intégralité du parcours de chaque client dans son parcours d'achat dans le magasin. On parlera donc d'un ID-Suivi^t tel que décrit ci-avant dans la description avec le positionnement et la reconnaissance en temps réel de chaque client Client-A-xyz.

Comme les clients sont traqués en temps réel tout au long de leur parcours d'achat et que l'enlèvement des produits est également détecté et enregistré en temps réel grâce au système de balances tel que décrit ci-avant dans la description, la présente invention permet d'attribuer le produit enlevé au bon panier et donc au bon client.

La sortie du client est ensuite gérée par tout moyen approprié.

Par exemple, lorsque le client sort du magasin (de l'enceinte du magasin vers le sas de d'entrée ou de sortie du magasin s'ils sont différents, ou vers la porte d'entrée ou de sortie du magasin si elles sont différentes), il doit d'abord activer sa sortie ; par exemple en appuyant sur un interrupteur pour déverrouiller une porte ou un tourniquet.

Le couple (ID-Suivi, ID-Panier) étant associé au client, il sera donc automatiquement associé à la sortie de ce client, ce qui permet à l'application de fermer la session d'achats ; cette fermeture de session s'accompagne avantageusement du débit du montant des achats du moyen de paiement du client ainsi que d'une mise à jour de l'inventaire des stocks de produits. L'émission d'un ticket de caisse et/ou facture électronique pourra aussi être envoyée au client.

**Liste** de références

ID-Client : Identifiant Client représenté par son code unique ID
Pi : produit i unique représenté par sa référence i
Pi-poids : poids du produit i
Pi-xyz : localisation dans l'espace du produit i
n : identifiant de plateau(x) sur lesquels les produits sont disposés
Ep-Pi : événement de prise de produit i comprenant les informations de localisation du produit pris Pi-xyz en temps réel
3D : trois dimensions
Client-A-xyz : informations de localisation en temps réel de chaque Client
ID-panier: Identifiant du panier d'achat de produits pour le client identifié ID-client
[Se] : signal d'entrée représentant la valeur mesurée par le dispositif de détection de poids (capteur/balance)

**Revendications**

**1.** Magasin de vente au détail de produits en libre-service pour des clients ayant un identifiant représenté par un ID-client comprenant un moyen d'accès contrôlé et d'identification du client par son ID-client,
un moyen de sortie contrôlée et de paiement automatisé sans caisses ni caissiers,
des rangées d'étagères comprenant des plateaux sur lesquels sont disposés les produits,
un inventaire des produits en magasin intégrant au moins les informations de poids des produits, de localisation dans l'espace des produits et des plateaux sur lesquels les produits sont disposés, un système de contrôle de prise de produit en temps réel comprenant un moyen de mesure de poids et un moyen de gestion de poids,
le moyen de mesure de poids comprenant un dispositif de détection de poids intégré aux plateaux, capable de détecter une différence de poids pendant une opération d'enlèvement de produit et de produire des signaux correspondants ; et
le moyen de gestion de poids recevant les signaux du moyen de mesure de poids et générant grâce à ces signaux et aux informations d'inventaire des produits des événements de prise de produit correspondants en temps réel comprenant les informations de localisation du produit pris,
un système de reconnaissance et de suivi du client en temps réel capable de générer des informations en temps réel comprenant la reconnaissance et le suivi de chaque client associé au client identifié ID-client et la localisation de chaque client dans le magasin, un moyen d'attribution de la prise de produit au client identifié ID-client ayant pris le produit comprenant
la création d'un panier d'achat de produits pour le client identifié ID-client, et
un dispositif d'attribution de la prise de produit qui, à chaque événement de prise de produit, prend en compte en temps réel la distance entre la localisation du produit pris et la localisation du client dans le magasin pour attribuer le produit pris au client identifié ID-client et au panier d'achat de produits correspondant, **caractérisé en ce que** le moyen de gestion de poids est capable de générer à partir des signaux du dispositif de détection de poids des événements qui ne sont pas de manière individuelle des événements de prise de produit et qui comprennent des informations de différence de poids, de temps et de durée de chaque événement et **en ce que** le moyen de gestion de poids comprend un module d'agrégation qui traite et regroupe les signaux transmis par le dispositif de détection de poids pendant un certain laps de temps et est capable de reclassifier en un événement de prise de produit une somme d'événements qui ne le sont pas.

**2.** Magasin de vente au détail de produits en libre-service selon la revendication 1 dans lequel le moyen de gestion de poids comprend un module de détection d'échelon dont l'échelon est un échelon de masse prédéfini dépendant du poids du produit provenant des informations d'inventaire, module qui reçoit les signaux du dispositif de détection de poids pour les traduire en événements de prise de produit.

**3.** Magasin de vente au détail de produits en libre-service selon l'une quelconque des revendications précédentes dans lequel les signaux sont échantillonnés sur un intervalle de temps t1 qui est inférieur à 500 millisecondes (ms), par exemple toutes les 200 millisecondes (ms).

**4.** Magasin de vente au détail de produits en libre-service selon l'une quelconque des revendications 2 à 3 dans lequel les événements de prise de produit comprennent les temps de début et de fin de l'échelon et la différence de masse observée pendant la durée de cet échelon.

5. Magasin de vente au détail de produits en libre-service selon l'une quelconque des revendications 2 à 4 dans lequel le moyen de gestion de poids comprend un module de classification d'échelon capable de classer les événements de prise en événements de prise de produit lorsque l'échelon observé correspond à une prise ou une dépose de produit et en événement irrégulier quand l'échelon observé correspond à une prise ou une dépose d'un poids de produit différent du poids de produit.

6. Magasin de vente au détail de produits en libre-service selon l'une quelconque des revendications précédentes dans lequel l'agrégation est temporelle et effectuée pendant un laps de temps supérieur à la durée d'échantillonnage des signaux et inférieurs à 2 secondes.

7. Magasin de vente au détail de produits en libre-service selon l'une quelconque des revendications précédentes dans lequel le dispositif de détection de poids comprend une ou plusieurs balances par plateau et l'agrégation est effectuée sur des événements provenant de signaux provenant d'une seule et même balance.

8. Magasin de vente au détail de produits en libre-service selon l'une quelconque des revendications précédentes dans lequel le dispositif de détection de poids comprend une ou plusieurs balances par plateau et l'agrégation est effectuée sur des événements provenant de signaux provenant de balances différentes disposées sur une même étagère.

9. Magasin de vente au détail de produits en libre-service selon l'une quelconque des revendications précédentes dans lequel le dispositif de détection de poids comprend une ou plusieurs balances par plateau et l'agrégation est effectuée sur des événements provenant de signaux provenant de balances différentes disposées sur une des étagères différentes.

10. Magasin de vente au détail de produits en libre-service selon l'une quelconque des revendications précédentes dans lequel le dispositif de détection de poids comprend des balances et en ce qu'au moins un produit est disposé à cheval sur deux balances juxtaposées et intégrées à deux plateaux juxtaposés sur la même étagère ou intégrées à deux plateaux juxtaposés sur deux étagères juxtaposées.

11. Magasin de vente au détail de produits en libre-service selon l'une quelconque des revendications précédentes dans lequel le module d'agrégation utilise un algorithme d'apprentissage automatique de type arbre de décision entraîné sur un ensemble de données d'événements agrégés.

12. Magasin de vente au détail de produits en libre-service selon l'une quelconque des revendications précédentes dans lequel le système de reconnaissance et de suivi du client en temps réel comprend des appareils de prise de vue en trois dimensions 3D équipés de capteurs de couleurs et un dispositif de reconnaissance et de suivi du client, les appareils de prise de vue 3D couvrant tout l'espace du magasin dans lequel les clients peuvent se déplacer de manière à détecter les clients et à produire des signaux correspondants ; et le dispositif de reconnaissance et de suivi du client recevant les signaux des appareils de prise de vue 3D et générant des informations correspondantes en temps réel comprenant la reconnaissance et le suivi de chaque client associé au client identifié ID-client et la localisation de chaque client dans le magasin, le dispositif de reconnaissance et de suivi du client en temps réel comprenant un module de détection de client au moyen d'un appareil de prise de vue en 3D qui associe à chaque client une boîte englobante et un masque de segmentation, un module d'extraction de variables explicatives par suivi multi-clients au moyen d'un appareil de prise de vue en 3D qui associe un descripteur d'apparence à chaque client et un module de suivi multi-clients multi-appareils de prise de vue en 3D qui fusionne en temps réel les informations des autres modules de manière à localiser chaque client dans le magasin en temps réel.

13. Magasin de vente au détail de produits en libre-service selon la revendication 12 dans lequel le système de reconnaissance et de suivi du client en temps réel utilise un algorithme pour la classification et la détection d'objets basé sur la méthode de partitionnement de données qui définit comme point de référence de reconnaissance et de suivi du client le centre de gravité, la tête et/ou le point situé au centre du segment reliant les 2 épaules du client.

14. Magasin de vente au détail de produits en libre-service selon la revendication 13 dans lequel la méthode de partitionnement de données définit comme point de référence de reconnaissance et de suivi du client le point situé au centre du segment reliant les 2 épaules du client.

**15.** Magasin de vente au détail de produits en libre-service selon l'une quelconque des revendications 12 à 14 dans lequel le module de détection de client du dispositif de reconnaissance et de suivi du client en temps réel utilise un algorithme d'apprentissage en profondeur, de préférence un algorithme YOLO, par exemple sa version YOLOv3.

[Fig. 1]

Europäisches
Patentamt

European
Patent Office

Office européen
des brevets

## RAPPORT DE RECHERCHE EUROPEENNE

Numéro de la demande

EP 21 18 4995

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | FR 3 038 106 A1 (NU [FR]) 30 décembre 2016 (2016-12-30) * figures 1-23 * * page 12, ligne 7 - ligne 17 * ----- | 1-15 | INV. G06Q20/18 G06Q20/20 G07G1/00 A47F10/02 |
| A | US 5 728 999 A (TEICHER MORDECHAI [IL]) 17 mars 1998 (1998-03-17) * figures 6A-6C * ----- | 1-15 | ADD. G06Q10/08 G06Q30/06 |
| A | US 3 716 697 A (WEIR S) 13 février 1973 (1973-02-13) * figures 1-10 * ----- | 1-12 | |
| A | CA 3 011 318 A1 (E VENTOR TECH KFT [HU]) 13 janvier 2020 (2020-01-13) * figures 1-5 * ----- | 1-15 | |

DOMAINES TECHNIQUES RECHERCHES (IPC)

G06Q
G07G
A47B
A47F

Le présent rapport a été établi pour toutes les revendications

| Lieu de la recherche | Date d'achèvement de la recherche | Examinateur |
|---|---|---|
| La Haye | 8 novembre 2021 | Ibarrondo, Borja |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 21 18 4995

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

08-11-2021

| Document brevet cité au rapport de recherche | | Date de publication | Membre(s) de la famille de brevet(s) | | Date de publication |
|---|---|---|---|---|---|
| FR 3038106 | A1 | 30-12-2016 | EP | 3314587 A1 | 02-05-2018 |
| | | | FR | 3038106 A1 | 30-12-2016 |
| | | | MA | 44325 A | 02-05-2018 |
| | | | WO | 2016207569 A1 | 29-12-2016 |
| US 5728999 | A | 17-03-1998 | AUCUN | | |
| US 3716697 | A | 13-02-1973 | AUCUN | | |
| CA 3011318 | A1 | 13-01-2020 | CA | 3011318 A1 | 13-01-2020 |
| | | | CA | 3106064 A1 | 16-01-2020 |
| | | | CN | 112673402 A | 16-04-2021 |
| | | | EP | 3821407 A1 | 19-05-2021 |
| | | | KR | 20210047300 A | 29-04-2021 |
| | | | US | 2021224773 A1 | 22-07-2021 |
| | | | WO | 2020012206 A1 | 16-01-2020 |

EPO FORM P0460

Pour tout renseignement concernant cette annexe : voir Journal Officiel de l'Office européen des brevets, No.12/82

**EP 3 940 614 A1**

**RÉFÉRENCES CITÉES DANS LA DESCRIPTION**

**Documents brevets cités dans la description**

- FR 3038106 A1